# EUROPÄISCHE PATENTSCHRIFT

(11) **EP 0 723 809 B1**
(45) Veröffentlichungstag und Bekanntmachung des Hinweises auf die Patenterteilung: **21.04.1999**
(21) Anmeldenummer: 96100747.3
(22) Anmeldetag: 19.01.1996
(51) Int. Cl.: B01J 23/42, B01J 23/92, B01J 38/64, C01B 21/14

(54) **Verfahren zur Herstellung eines Hydrierungskatalysators**
Process for preparing a hydrogenation catalyst
Procédé de préparation d'un catalyseur d'hydrogénation

(30) Priorität: 27.01.1995 DE 19502580
(43) Veröffentlichungstag der Anmeldung: 31.07.1996
(73) Patentinhaber: BASF AKTIENGESELLSCHAFT, 67056 Ludwigshafen (DE)
(72) Erfinder: Heineke, Daniel, Dr., D-67065 Ludwigshafen (DE); Schneider, Heinz-Walter, Dr., D-67069 Ludwigshafen (DE); Thomé, Alfred, Dr., D-67346 Speyer (DE)

(56) Entgegenhaltungen:
- EP-A- 0 308 719
- EP-A- 0 334 121
- EP-A- 0 467 174
- DE-C- 956 038
- GB-A- 1 197 619

## Beschreibung

Die vorliegende Erfindung betrifft ein Verfahren zur Herstellung eines Hydrierungskatalysators durch Reduktion von Platin in einer Oxidationsstufe nicht kleiner als 2 in einem wäßrigen Medium in Gegenwart eines kohlenstoffhaltigen Trägers, gegebenenfalls nach partieller Vergiftung mit einer Schwefel-, Arsen-, Tellur- oder Antimon-haltigen Verbindung, mit einem Reduktionsmittel.

Des weiteren betrifft die Erfindung einen Hydrierungskatalysator, hergestellt nach dem erfindungsgemäßen Verfahren, dessen Verwendung zur Herstellung von Hydroxylammoniumsalzen, ein Verfahren zur Herstellung von Hydroxylammoniumsalzen sowie ein Verfahren zur Regenerierung von Hydrierungskatalysatoren auf der Basis von Platin.

Für die Hydrierung von organischen und anorganischen Verbindungen eignen sich Edelmetalle wie Palladium, Platin oder Ruthenium, die auf diverse Träger wie Siliciumdioxid, Aluminiumoxid, Graphit oder Aktivkohle aufgebracht sind, wie aus "Katalytische Hydrierungen im organisch chemischen Laboratorium", F. Zimalkowski, Ferdinand Enke Verlag, Stuttgart (1965) bekannt ist.

Wesentlich für die Aktivität dieser Katalysatoren ist die hohe Dispersion des Edelmetalls auf dem Katalysatorträger. Verfahrenstechnisch nachteilig ist die Tatsache (siehe "Structure of Metallic Catalyst", J.R. Anderson, Academic Press (1975), Seiten 164ff), daß unter Reaktionsbedingungen durch Agglomeration die Partikelgröße des aufgebrachten Edelmetalls zunimmt, die Dispersion abnimmt sowie das elementare Edelmetall von der Trägermasse abgelöst wird.

Die DE-C 4022 853 beschreibt, daß durch Verwendung von Platin-Graphitträger-Katalysatoren mit einer Korngröße des Graphits zwischen 1 und 600 µm die Selektivität in Bezug auf Hydroxylamin bei der Hydrierung von Stickstoffmonoxid gesteigert werden kann.

Aus der DE-PS 956038 sind bereits Platin-Graphitträger-Katalysatoren bekannt, die durch Fällen von Platin auf suspendierten Graphitträgern, gegebenenfalls unter Zusatz von vergiftenden Mitteln wie Schwefel-, Selen-, Arsen- oder Tellurverbindungen, erhalten werden. Solche Katalysatoren eignen sich zur katalytischen Hydrierung von Stickstoffmonoxid. Diese Katalysatoren haben den Nachteil, daß die Reaktivität und Selektivität rasch abnimmt.

Die DE-C 4022 851 beschreibt, daß bei der Herstellung von Hydroxylamin durch Hydrierung von Stickstoffmonoxid in Gegenwart von Platin-Graphit-Trägerkatalysatoren die Selektivität im Zusammenhang mit der scheinbaren Dichte, der Druckfestigkeit und Porosität des Graphitträgers steht.

Die in den Verfahren der zuvor genannten deutschen Patentschriften verwendeten Katalysatoren haben den Nachteil, daß aufgrund von Agglomeration der Aktivkomponenten nur relativ kurze Standzeiten der Katalysatoren erreicht werden können.

Aufgabe der vorliegenden Erfindung war es daher, ein verbessertes Verfahren zur Herstellung von Hydrierungskatalysatoren zur Verfügung zu stellen, das längere Standzeiten der verwendeten Katalysatoren bei mindestens gleicher Selektivität und hoher Raum-Zeit-Ausbeute gewährleistet. Des weiteren sollte eine Minimierung der Nebenprodukte, insbesondere des Distickstoffmonoxids erreicht werden.

Demgemäß wurde ein Verfahren zur Herstellung eines Hydrierungskatalysators durch Reduktion von Platin in einer Oxidationsstufe nicht kleiner als 2 in einem wäßrigen Medium in Gegenwart eines kohlenstoffhaltigen Trägers, gegebenenfalls nach partieller Vergiftung mit einer Schwefel-, Arsen-, Tellur- oder Antimonhaltigen Verbindung, mit einem Reduktionsmittel gefunden, in dem man als Reduktionsmittel ein Ammonium- oder Phosphoniumsalz der allgemeinen Formel I

[XR₄]ₙY I

in der X für N oder P, R für Wasserstoff, C₁-C₁₈-Alkyl, C₅-C₁₀-Cycloalkyl, Phenylrest sowie ein mit Phenyl substituierter C₁-C₄-Alkylrest, wobei die Phenylreste ein- bis dreifach mit C₁-C₆-Alkyl, Halogen, Nitro oder Amino substituiert sein können, mit der Maßgabe, daß R gleich oder verschieden sein, jedoch nicht gleichzeitig Wasserstoff bedeuten kann, falls X = P, n eine ganze Zahl von 1 bis 3, und Y ein organisches Anion, das Platin in einer von Null verschiedenen Oxidationsstufe zu Platin in der Oxidationsstufe Null reduzieren kann, bedeuten, einsetzt.

Des weiteren wurde ein Hydrierungskatalysator, hergestellt nach dem erfindungsgemäßen Verfahren, dessen Verwendung zur Herstellung von Hydroxylammoniumsalzen, ein Verfahren zur Herstellung von Hydroxylammoniumsalzen sowie ein Verfahren zur Regenerierung von Hydrierungskatalysatoren auf der Basis von Platin gefunden.

Das erfindungsgemäße Verfahren unterscheidet sich von Verfahren des Standes der Technik im wesentlichen dadurch, daß man zur Reduktion von Platin in einer von Null verschiedenen Oxidationsstufe zum metallischen Platin (Oxidationsstufe Null) ein Reduktionsmittel der allgemeinen Formel I

[XR₄]ₙY I

in der X für N oder P, R für Wasserstoff, C₁-C₁₈-Alkyl wie Methyl, Ethyl, n-Propyl, i-Propyl, n-Butyl, i-Butyl, t-Butyl, n-Pentyl, n-Hexyl, n-Heptyl, n-Octyl, n-Nonyl, n-Decyl, n-Undecyl, n-Dodecyl (Lauryl), n-Tridecyl, n-Tetradecyl, (Myristyl), n-Pentadecyl, n-Hexadecyl (Palmityl), n-Heptadecyl und n-Octadecyl (Stearyl), bevorzugt Wasserstoff, Methyl, Ethyl, n-Propyl, i-Propyl, n-Butyl, n-Hexadecyl (Palmityl) und n-Octadecyl (Stearyl); C₅-C₁₀-Cycloalkyl wie Cyclopentyl, Cyclohexyl, Cycloheptyl, Cyclooctyl, Cyclononyl, Cyclodecyl, insbesondere Cyclopentyl und Cyclohexyl; Phenylrest sowie mit Phenyl substituiertes C₁-C₄-Cycloalkyl, wobei die Phenylreste ein bis dreifach mit C₁-C₆-Alkyl wie Methyl, Ethyl, n-Propyl, n-Butyl, n-Pentyl, n-Hexyl, bevorzugt Methyl, Ethyl, n-Propyl, i-Propyl, t-Butyl, substituiert sein können wie Phenyl, Tolyl, Benzyl, Mesityl, Supermesityl, mit der Maßgabe, daß R gleich oder verschieden sein, jedoch nicht gleichzeitig Wasserstoff bedeuten kann, falls X = P und n eine ganze Zahl von 1 bis 3 und Y ein organisches Anion, das Platin in einer von Null verschiedenen Oxidationsstufe zu Platin in der Oxidationsstufe Null reduzieren kann, bedeuten, einsetzt.

Besonders bevorzugte Säureanionen Y sind solche der Ameisensäure, Essigsäure, Zitronensäure, Oxalsäure und Ascorbinsäure.

Besonders bevorzugte Verbindungen sind solche, in denen R für Wasserstoff sowie C₁-C₁₆-Alkyl steht wie Ammoniumformiat, Tetramethylammoniumformiat, Tetraethylammoniumformiat, Tetrapropylammoniumformiat, Tetraisopropylammoniumformiat, Tetrabutylammoniumformiat und Palmityltributylammoniumformiat.

In einer bevorzugten Ausführungsform führt man die Reduktion in Gegenwart eines Salzes QZ, wobei Q ein Alkalimetall- oder ein Erdalkalimetallkation der Metalle Lithium, Natrium und Kalium, Magnesium und Calcium, besonders bevorzugt Natrium, und Z ein Anion, ausgewählt aus der Gruppe, bestehend aus Halogen wie Chlor und Brom, bevorzugt Chlor, Sulfat, Hydrogensulfat, Phosphat und Nitrat, bedeuten, durch.

In einer weiteren bevorzugten Ausführungsform setzt man die Anionen und Kationen des Reduktionsmittels I und des Salzes QZ in ausgetauschter Form, [XR₄]Z und QₙY, ein, bevorzugt beispielsweise das Salzpaar Natriumformiat und Tetrabutylammoniumhydrogensulfat.

In einer weiteren bevorzugten Ausführungsform kann man auch als Reduktionsmittel eine äquimolare Mischung aus einem Ammoniumsalz mit einem Anion Z und Natriumformiat, bevorzugt Natriumformiat und Tetra-C₁-C₄-alkylammoniumsalz, besonders bevorzugt Natriumformiat und Tetra-n-butylammoniumsalz, ganz besonders bevorzugt Natriumformiat und Tetra-n-butylammoniumchlorid oder Tetra-n-butylammoniumhydrogensulfat, einsetzen.

Die Herstellung der Hydrierungskatalysatoren erfolgt in der Regel in an sich bekannter Weise (siehe DE-C 4022853), indem man eine Platin(IV)-Verbindung in wäßriger Lösung in Gegenwart eines kohlenstoffhaltigen Trägers zu Platin (0) reduziert. Mittel zum partiellen Vergiften des Katalysators setzt man vorteilhaft nach Abpuffern der Lösung mit Alkalimetallacetat zu.

Wird als Vergiftungsmittel eine Verbindung verwendet, die in der Lage ist, Platin (IV) zu Platin (II) zu reduzieren (z.B. Natriumdithionit) so wird die Reduktion vorteilhaft zunächst bis zur Stufe des Platin (II) durchgeführt. Der Endpunkt dieser Reaktion ist an einer starken Änderung des Potentials, das man während der Reduktion mißt, erkennbar. Die partielle Vergiftung erfolgt dann durch Zugabe einer bestimmten, über die Reduktion des Platin (IV) zu Platin (II) hinaus benötigten Menge. Dann erfolgt üblicherweise die Reduktion mit einem Reduktionsmittel der Formel I.

Verwendet man als Vergiftungsmittel eine Verbindung, die unter den Reaktionsbedingungen Platin (IV) nicht zu Platin (II) reduziert, so kann Platin (IV) direkt mit einem Reduktionsmittel der Formel I zu Platin (0) gefällt werden.

Als Platin (IV)-Verbindung kommen insbesondere die wasserlöslichen Verbindungen wie Hexachloroplatinsäure und ihre Alkalimetall- und Ammoniumsalze in Frage.

Das Molverhältnis von eingesetztem Platin zu Reduktionsmittel der Formel I beträgt üblicherweise 1000:1 bis 10:1 vorzugsweise 100:1 bis 20:1.

Als kohlenstoffhaltiger Träger verwendet man in der Regel suspendierten Graphit oder Aktivkohlen, insbesondere Elektrographitsorten, besonders bevorzugt solche Elektrographitsorten, die eine Korngröße im Bereich von 0,5 bis 600 µm, vorzugsweise von 2 bis 50 µm aufweisen. Die Menge an Platin beträgt im allgemeinen von 0,2 bis 2, vorzugsweise von 0,3 bis 1 Gew.-%, bezogen auf die Gesamtmasse an Platin-Graphitträger-Katalysator.

Die Reduktion des Platins nimmt man im allgemeinen in einer wäßrigen Lösung vor, wobei das Gewichtsverhältnis von Wasser zu Platin in der Regel 1000:1 bis 100:1, vorzugsweise von 500:1 bis 100:1, gewählt wird.

Des weiteren führt man die Reduktion im leicht Sauren durch, wobei der pH-Wert üblicherweise von 4,5 bis 7, bevorzugt von 5 bis 6 beträgt. Die Einstellung des pH-Wertes erfolgt im allgemeinen durch Zusatz von Puffersalzen wie Alkalimetallacetat, insbesondere Natriumacetat.

In einer bevorzugten Ausführungsform verwendet man als Reduktionsmittel Natriumdithionit und gibt gerade soviel davon zu, daß das mit einer Glaselektrode gemessene Potential der Lösung im Bereich von 420 bis 500 mV, vorzugsweise von 440 mV bis 480 mV beträgt. Nach erfolgter Reduktion des Platin(IV) zu Platin (II), das an einer starken Änderung des Potentials erkennbar ist, gibt man dann im allgemeinen eine über die Reduktion des Platin(IV) zu Platin(II) hinaus benötigte Menge an Natriumdithionit zu bis zur Erreichung eines bestimmten Potentials. Dieses Potential charakterisiert den Vergiftungszustand des Katalysators und liegt im Bereich von 200 bis 440, bevorzugt von 270 mV bis 340 mV.

In einer weiteren bevorzugten Ausführungsform vergiftet man den Katalysator ohne vorherige Reduktion des Platin(IV) zu Platin (II) partiell durch Zusatz eines üblichen Vergiftungsmittels auf der Basis von Schwefel, Selen, Arsen oder Tellur wie Natriumdithionit, Alkalimetallthiosulfate, Schwefelwasserstoff, Alkalimetallsulfid, Alkalimetallpolysulfide, Thioharnstoff, Tellursäure oder Arsensäure sowie deren Mischungen.

Das Molverhältnis von Platin zu vergiftendem Schwefel, Selen, Arsen oder Tellur wählt man üblicherweise im Bereich von 20:1 bis 3:1, vorzugsweise von 10:1 bis 5:1.

Die partielle Vergiftung führt man üblicherweise nach an sich bekannten Methoden durch wie sie beispielsweise in der DE-C 40 22 853 beschrieben sind.

Im Anschluß an die gegebenenfalls durchgeführte partielle Vergiftung führt man in der Regel die Reduktion zu metallischem Platin durch.

Das Molverhältnis von Reduktionsmittel der allgemeinen Formel I zu Platin wählt man in der Regel im Bereich von 1000:1 bis 10:1, vorzugsweise 100:1 bis 20:1.

Die Temperatur während der Reduktion wählt man im allgemeinen im Bereich von 50 bis 95°C, vorzugsweise von 60 bis 90°C.

Des weiteren arbeitet man zweckmäßig unter Atmosphärendruck.

Der pH-Wert wahrend der Reduktion zu metallischem Platin hängt im wesentlichen von der Art des gewählten Reduktionsmittels ab. Da die Reduktionsmittel der allgemeinen Formel I Puffersysteme darstellen, hängt der pH-Wert üblicherweise von den pKs-Werten der Reduktionsmittel und den durch das Reduktionsmittel gepufferten pH-Bereichen ab.

Nach beendeter Reduktion arbeitet man den Katalysator in der Regel wie üblich auf, beispielsweise indem man ihn vom Reaktionsgemisch abfiltriert und zweckmäßig mit Wasser wäscht.

Die nach dem erfindungsgemäßen Verfahren erhaltenen Katalysatoren eignen sich nach den bisherigen Beobachtungen sowohl zur Hydrierung von organischen als auch von anorganischen Verbindungen.

Bevorzugt setzt man die erfindungsgemäßen Katalysatoren für die Hydrierung von olefinisch oder acetylenisch ungesättigten Verbindungen, weiterhin zur Hydrierung von Carbonsäuren, Aldehyden oder Ketonen zu den entsprechenden Alkoholen oder von Nitrilen zu den entsprechenden Aminen ein. Des weiteren eignen sich die erfindungsgemäßen Katalysatoren zur Hydrierung anorganischer Stoffe wie von Sauerstoff, insbesondere jedoch zur Herstellung von Hydroxylammoniumsalzen durch Hydrieren von Stickstoffmonoxid in wäßrigen Mineralsäuren.

Bei der Herstellung von Hydroxylammoniumsalzen hält man in der Regel ein Molverhältnis von Wasserstoff zu Stickstoffmonoxid von 1,5:1 bis 6:1, bevorzugt von 3,5 bis 5:1, ein. Besonders gute Ergebnisse erhält man nach den bisherigen Beobachtungen, wenn man darauf achtet, daß in der Reaktionszone ein Molverhältnis von Wasserstoff zu Stickstoffmonoxid von 3,5:1 bis 5:1 aufrecht erhalten wird.

Vorteilhaft verwendet man als Säuren starke Mineralsäuren wie Salpetersäure, Schwefelsäure oder Phosphorsäure oder aliphatische C₁-C₅-Monocarbonsäuren wie Ameisen-, Essig-, Propion-, Butter-, und Valeriansäure, bevorzugt Ameisensäure und Essigsäure. Geeignet sind auch saure Salze wie Ammoniumbisulfat. In der Regel wendet man 4 bis 6 normale wäßrige Säuren an und läßt üblicherweise im Verlauf der Reaktion die Säurekonzentration nicht unter 0,2 normal absinken.

Die Hydrierung von Stickstoffmonoxid führt man im allgemeinen bei einer Temperatur von 30 bis 80, vorzugsweise von 35 bis 60°C, aus. Des weiteren wählt man den Druck während der Hydrierung üblicherweise im Bereich von 1 bis 30, vorzugsweise 1 bis 20 bar (absolut).

Das Verhältnis von Mineralsäure zu Katalysator hängt im wesentlichen vom Platinmetall und vom Reaktordruck ab und liegt im Falle von Platin im allgemeinen im Bereich von 1 bis 100, vorzugsweise 30 bis 80 g Platin-Graphit-Katalysator je Liter Mineralsäure.

In einer weiteren bevorzugten Ausführungsform, insbesondere bei der Herstellung von Hydroxylammoniumsalzen, behandelt man den Katalysator vor der Hydrierung in saurer Lösung, zweckmäßig in der Mineralsäure, in der die Hydrierung durchgeführt werden soll mit Wasserstoff ("Aktivierung").

Verbrauchte Platinmetall-Katalysatoren kann man mit Hilfe des erfindungsgemäßen Verfahrens regenerieren, indem man das Platinmetall des Katalysators üblicherweise mittels einer Säure oder einem Säuregemisch in Lösung bringt und gegebenenfalls unlösliche Bestandteile abtrennt. Anschließend neutralisiert man die erhaltene Platinmetallsalzlösung, und behandelt dann das Platinmetallsalz nach dem oben beschriebenen erfindungsgemäßen Verfahren.

Die erfindungsgemäßen Katalysatoren sind nach den bisherigen Beobachtungen bekannten Katalysatoren für den gleichen Zweck hinsichtlich Aktivität, Selektivität und Standzeit überlegen. Das erfindungsgemäße Verfahren zur Herstellung und zur Regenerierung von Hydrierungskatalysatoren hat gegenüber bekannten Verfahren den Vorteil, daß es einfacher auszuführen ist und gleichzeitig die Mengen an Abfallprodukten reduziert.

### Beispiele

Die Graphitteilchengröße wurde mit einem MALVERN Mastersizer (s. auch Verfahrenstechnik 24 (1990) S. 36ff) bestimmt. Gemessen wurde die Fraunhofer-Beugung bei einer Wellenlänge von 633 nm. Durch Wahl einer Vorsatzlinse mit einer Brennweite von f = 300 nm wurde die Teilchengrößenverteilung in einem Bereich von 1 bis 600 µm bestimmt.

Zur Messung wurde eine Spatelspitze des zu untersuchenden Pulvers in einen Liter einer 0,1 gew.-%igen wäßrigen Nekanil® 910-Lösung (BASF AG; Nekanil® 910 ist ein mit 9 bis 10 mol Ethylenoxid umgesetztes Nonylphenol; Eigenschaften: wasserklare, viskose Flüssigkeit; nichtionisch, Dichte bei 20°C: 1,04 g/cm³ Stockpunkt: unter -10°C; pH-Wert einer 1 gew.-%igen Lösung 6,5 bis 8,5) gegeben. Vor der Messung wurde die so erhaltene zu untersuchende Mischung 1 min einer Ultraschall-Behandlung unterzogen.

### Beispiel 1

40 g eines Graphits mit einer Teilchengröße von 28-50 µm und 0.5310 g Hexachloroplatin-IV-Säure-6-hydrat wurden mit 40 ml einer wäßrigen Lösung, die 3,87 ml konzentrierte Salzsäure und 0,87 ml konzentrierte Salpetersäure enthielt, über Nacht bei 80°C gerührt. Die erhaltene Suspension wurde solange mit Natriumcarbonat versetzt bis ein pH-Wert von 2,75 erreicht war. Anschließend wurden 2,5 g Natriumacetat zur Pufferung zugegeben. Danach wurde soviel einer 4,58 gew.-%igen wäßrigen Natriumdithionit-Lösung zugefügt, bis Platin (IV) zu Platin (II) reduziert war (erkennbar an einer starken Änderung des Potentials bei 460 mV).

Zur Vergiftung des Katalysators mit Schwefel wurde dieselbe Natriumdithionit-Lösung wie zur Reduktion des Platin(IV) zu Platin(II) verwendet wurde, im Überschuß von 60 Mol-% über die zur Reduktion von Platin (IV) zu Platin (II) erforderliche Menge zugegeben. Das mit einer Glaselektrode bestimmte Potential der danach erhaltenen Lösung betrug 340 mV.

Anschließend wurde die so erhaltene Suspension mit 10 ml einer 20 Gew.-% wäßrigen Tetramethylammoniumformiat-Lösung versetzt und 4h bei 80°C gerührt. Nach dieser Zeit war mit Hydrazinhydrat (ergibt in alkalischer Lösung bei Anwesenheit von Platin einen schwarzen Niederschlag) kein Platin mehr nachweisbar.

Der so hergestellte Katalysator wurde durch Filtration über eine Glasfritte vom Reaktionsgemisch abgetrennt und so lange mit destilliertem Wasser gewaschen, bis der pH-Wert des Waschwassers nicht mehr im sauren Bereich lag. Der getrocknete Katalysator enthielt 0,5 Gew.-% Platin.

b) 4.8 g des unter a) hergestellten Katalysators wurden in 120 ml 4,3 n Schwefelsäure suspendiert und bei 40°C unter kräftigem Rühren (3500 Upm) pro Stunde 7,75 l eines Gemisches aus 35 Vol.-% Stickstoffmonoxid und 65 Vol.-% Wasserstoff eingeleitet. Nach 4 Stunden wurde der Katalysator abgetrennt und die Flüssigphase analysiert. Anschließend wurde der abgetrennte Katalysator mit 120 ml 4,3 n Schwefelsäure versetzt und die Reaktion fortgeführt. Dieser Vorgang wurde alle vier Stunden wiederholt. Die Reaktion wurde abgebrochen, nachdem die Selektivität zu gebildetem Distickstoffmonoxid die gesetzte Obergrenze von 10 % überschritt. Die Versuchsergebnisse sind aus Tabelle 1 ersichtlich.

### Vergleichsbeispiel

Es wurde wie in Beispiel 1 verfahren mit den Unterschieden, daß mit 56 Mol-% Natriumdithionit-Überschuß zur Vergiftung gearbeitet wurde, und daß zur Fällung zum nullwertigen Platin 6,25 ml konz. Ameisensäure eingesetzt wurden. Die erzielten Ergebnisse sind Tabelle 1 zu entnehmen.

### Beispiel 2

40 g eines Graphits der Firma Asbury mit einer Teilchengröße von 28-68 µm und 0,5310 g Hexachloroplatin-IV-Säure-6-hydrat wurden mit 40 ml einer wäßrigen Lösung, die 3,87 ml konzentrierte Salzsäure und 0,87 ml konzentrierte Salpetersäure enthielt, über Nacht bei 80°C gerührt. Die erhaltene Suspension wurde solange mit Natriumcarbonat versetzt bis ein pH-Wert von 2,75 erreicht war. Anschließend wurden 2,5 g Natriumacetat zur Pufferung zugegeben. Zur partiellen Vergiftung des Katalysators wurden 6,25 mg elementarer Schwefel zugegeben und nach einer Wartezeit von 2 Minuten die so erhaltene Suspension mit 41,5 g einer 35 Gew.-% wäßrigen Tetraethylammoniumformiat-Lösung versetzt und 4 h bei 80°C gerührt. Nach dieser Zeit war mit Hydrazinhydrat (ergibt in alkalischer Lösung bei Anwesenheit von Platin einen schwarzen Niederschlag) kein Platin mehr nachweisbar.

Der so hergestellte Katalysator wurde durch Filtration über eine Glasfritte vom Reaktionsgemisch abgetrennt und solange mit destilliertem Wasser gewaschen, bis der pH-Wert des Waschwassers nicht mehr im sauren Bereich lag. Der getrocknete Katalysator enthielt 0,5 Gew.-% Platin.

b) 3,6 g des unter a) hergestellten Katalysators wurden in 120 ml 4,3 N Schwefelsäure suspendiert. In diese Suspension wurden bei 40°C unter kräftigem Rühren (3500 Upm) pro Stunde 7,75 l eines Gemisches aus 35 Vol.-% Stickstoffmonoxid und 65 Vol.-% Wasserstoff eingeleitet. Nach 4 Stunden wurde der Katalysator abgetrennt und die Flüssigphase analysiert. Anschließend wurde der abgetrennte Katalysator mit 120 ml 4,3 N Schwefelsäure versetzt und die Reaktion fortgeführt. Dieser Vorgang wurde alle vier Stunden wiederholt. Die Reaktion wurde abgebrochen, nachdem die Selektivität zu gebildetem Distickstoffmonoxid die gesetzte Obergrenze von 5 % überschritt. Die Versuchsergebnisse sind aus Tabelle 2 ersichtlich.

### Vergleichsbeispiel 2

Es wurde wie in Beispiel 2 verfahren mit dem Unterschied, daß zur Fällung 14 g einer 40 gew. -%igen Natriumformiat-Lösung zugegeben wurden. Die erzielten Ergebnisse sind Tabelle 2 zu entnehmen.

### Beispiel 3

Es wurde wie in Beispiel 2 verfahren mit dem Unterschied, daß zur Fällung 57,75 g einer wäßrigen 40 gew.-%igen Tetrabutylammoniumformiat-Lösung eingesetzt wurden. Die erzielten Ergebnisse sind Tabelle 2 zu entnehmen.

### Beispiel 4

Es wurde verfahren wie in Beispiel 2 beschrieben mit dem Unterschied, daß zur Reduktion 14 g einer 40 gew.-%igen NaHCOO-Lösung, der 27,92 g Tetrabutylammoniumhydrogensulfat zugesetzt wurden, versetzt.

### Beispiel 5

Es wurde verfahren wie in Beispiel 2 beschrieben mit dem Unterschied, daß zur Reduktion 13,07 g einer 40 gew.-%igen Ammoniumformiat-Lösung und zur Vergiftung 3,75 mg elementarer Schwefel eingesetzt wurden. Die erzielten Ergebnisse sind Tabelle 2 zu entnehmen.

### Beispiel 6

Es wurde verfahren wie in Beispiel 2 beschrieben, mit dem Unterschied, daß zur Reduktion 10 g einer 50 gew.-%igen tert.-Butylammoniumformiat-Lösung eingesetzt wurden.

**Tabelle 1**

| Beispiel | 1 | Vergleich 1 |
|---|---|---|
| Reduktionsmittel | Me₄NHCOO | HCOOH |
| Anzahl der Zyklen | 17 | 4 |
| Selektivität NH₂OH [%] | 88,55 | 85,53 |
| Selektivität NH₃ [%] | 7,49 | 6,36 |
| Selektivität N₂O [%] | 3,96 | 8,11 |
| NO-Umsatz [%] | 90,72 | 89,88 |
| Raum-Zeit-Ausbeute | 0,811 | 0,774 |

**Tabelle 2**

| Beispiel | 2 | 3 | 4 | 5 | 6 | Vergleich 2 |
|---|---|---|---|---|---|---|
| Reduktionsmittel | Et₄NHCOO | Bu₄NHCOO | Bu₄NHSO₄/NaHCOO | NH₄HCOO | tert.BuNH₃HCOO | NaHCOO |
| Anzahl der Zyklen | 5 | 10 | 7 | 13 | 7 | 4 |
| Selektivität NH₂OH [%] | 86,0 | 89,46 | 88,61 | 91,45 | 86,23 | 82,91 |
| Selektivität NH₃ [%] | 11,02 | 8,17 | 9,66 | 6,58 | 10,58 | 13,66 |
| Selektivität N₂O [%] | 2,96 | 2,38 | 1,73 | 1,97 | 3,11 | 3,44 |
| NO-Umsatz [%] | 93,99 | 90,19 | 92,96 | 93,05 | 94,5 | 95,57 |
| Raum-Zeit-Ausbeute | 0,817 | 0,817 | 0,832 | 6,859 | 0,823 | 0,799 |

## Patentansprüche

1. Verfahren zur Herstellung eines Hydrierungskatalysators durch Reduktion von Platin in einer Oxidationsstufe nicht kleiner als 2 in einem wäßrigen Medium in Gegenwart eines kohlenstoffhaltigen Trägers, gegebenenfalls nach erfolgter partieller Vergiftung mit Schwefel-, Arsen-, Tellur- oder Antimonhaltigen Verbindungen mit einem Reduktionsmittel, dadurch gekennzeichnet, daß man als Reduktionsmittel ein Ammonium- oder Phosphoniumsalz der allgemeinen Formel I
[XR₄]ₙY I
in der X für N oder P, R für Wasserstoff, C₁-C₁₈-Alkyl, C₅-C₁₀-Cycloalkyl, Phenylrest sowie ein mit Phenyl substituierter C₁-C₄-Alkylrest, wobei die Phenylreste ein- bis dreifach mit C₁-C₆-Alkyl, Halogen, Nitro oder Amino substituiert sein können, mit der Maßgabe, daß R gleich oder verschieden sein, jedoch nicht gleichzeitig Wasserstoff bedeuten kann, falls X = P, n eine ganze Zahl von 1 bis 3, und Y ein organisches Anion, das Platin in einer von Null verschiedenen Oxidationsstufe zu Platin in der Oxidationsstufe Null reduzieren kann, bedeuten, einsetzt.

2. Verfahren nach Anspruch 1, dadurch gekennzeichnet, daß man die Reduktion in Gegenwart eines Salzes QZ, wobei Q ein Alkalimetall-oder ein Erdalkalimetallkation und Z ein Anion, ausgewählt aus der Gruppe, bestehend aus Halogen, Sulfat, Hydrogensulfat, Phosphat und Nitrat bedeuten, durchführt.

3. Verfahren nach Anspruch 2, dadurch gekennzeichnet, daß man die Anionen und Kationen des Reduktionsmittels I und des Salzes QZ, in ausgetauschter Form, [XR₄]Z und QₙY, einsetzt.

4. Verfahren nach den Ansprüchen 1 bis 3, dadurch gekennzeichnet, daß man als organisches Anion Y ein Säureanion ausgewählt aus der Gruppe, bestehend aus Ameisensäure, Essigsäure, Zitronensäure und Ascorbinsäure einsetzt.

5. Verfahren nach den Ansprüchen 1 bis 4, dadurch gekennzeichnet, daß man als Reduktionsmittel eine Verbindung, ausgewählt aus der Gruppe, bestehend aus Ammoniumformiat, Tetraethylammoniumformiat, Tetra-n-butylammoniumformiat, Tetramethylammoniumformiat sowie eine äquimolare Mischung aus Natriumformiat und einem Ammoniumsalz, einsetzt.

6. Hydrierungskatalysator, erhältlich durch eines der Verfahren gemäß den Ansprüchen 1 bis 5.

7. Verwendung der Hydrierungskatalysatoren gemäß Anspruch 4 oder hergestellt gemäß den Ansprüchen 1 bis 5 zur Herstellung von Hydroxylammoniumsalzen.

8. Verfahren zur Herstellung von Hydroxylammoniumsalzen durch Reduktion von Stickstoffmonoxid mit Wasserstoff in Gegenwart eines Hydrierungskatalysators, dadurch gekennzeichnet, daß man als Hydrierungskatalysator den Hydrierungskatalysator gemäß Anspruch 6 oder einen hergestellt gemäß den Ansprüchen 1 bis 5 einsetzt.

9. Verfahren zum Regenerieren eines Hydrierungskatalysators auf der Basis von Platin in an sich bekannter Weise, dadurch gekennzeichnet, daß man bei der Reduktion zu Platin in der Oxidationsstufe Null als Reduktionsmittel ein Ammonium- oder Phosphoniumsalz der allgemeinen Formel I
[XR₄]ₙY
in der X für N oder P, R für Wasserstoff, C₁-C₁₈-Alkyl, C₅-C₁₀-Cycloalkyl, Phenylrest sowie ein mit Phenyl substituierter C₁-C₄Alkylrest, wobei die Phenylreste ein- bis dreifach mit C₁-C₆-Alkyl, Halogen, Nitro oder Amino substituiert sein können, mit der Maßgabe, daß R gleich oder verschieden sein, jedoch nicht gleichzeitig Wasserstoff bedeuten kann, falls X = P, n eine ganze Zahl von 1 bis 3, und Y ein organisches Anion, das Platin in einer von Null verschiedenen Oxidationsstufe zu Platin in der Oxidationsstufe Null reduzieren kann, bedeuten, einsetzt.

10. Verfahren gemäß Anspruch 9, dadurch gekennzeichnet, daß man die Reduktion in Gegenwart eines Salzes QZ, wobei Q ein Alkalimetall-oder ein Erdalkalimetallkation und Z ein Anion, ausgewählt aus der Gruppe, bestehend aus Halogen, Sulfat, Hydrogensulfat, Phosphat und Nitrat, bedeuten, durchführt.

11. Verfahren nach Anspruch 10, dadurch gekennzeichnet, daß man die Anionen und Kationen des Reduktionsmittels I und des Salzes QZ in ausgetauschter Form, [XR₄]Z und QₙY, einsetzt.

## Claims

1. A process for preparing a hydrogenation catalyst by reducing, with a reducing agent, platinum in an oxidation state of not less than 2 in an aqueous medium in the presence of a carbonaceous carrier, optionally after partial poisoning with sulfur-, arsenic-, tellurium- or antimony-containing compounds has been effected, characterized in that the reducing agent used is an ammonium or phosphonium salt of the general formula I
[XR₄]ₙY I
where X is N or P, R is hydrogen, C₁-C₁₈-alkyl, C₅-C₁₀-cycloalkyl, phenyl or a phenyl-substituted C₁-C₄-alkyl radical, the phenyl radicals can be singly to triply substituted by C₁-C₆-alkyl, halogen, nitro or amino, with the proviso that the R's, which can be identical or different, are not all hydrogen when X = P, n is an integer from 1 to 3, and Y is an organic anion capable of reducing platinum in an oxidation state other than zero to platinum in the oxidation state zero.

2. A process as claimed in claim 1, characterized in that the reduction is carried out in the presence of a salt QZ, where Q is an alkali or alkaline earth metal cation and Z is an anion selected from the group consisting of halogen, sulfate, hydrogensulfate, phosphate and nitrate.

3. A process as claimed in claim 2, characterized in that the anions and cations of the reducing agent I and of the salt QZ are used in exchanged form, [XR₄]Z and QₙY.

4. A process as claimed in any of claims 1 to 3, characterized in that the organic anion Y used is an acid anion selected from the group consisting of formic acid, acetic acid, citric acid and ascorbic acid.

5. A process as claimed in any of claims 1 to 4, characterized in that the reducing agent used is a compound selected from the group consisting of ammonium formate, tetraethylammonium formate, tetra-n-butylammonium formate, tetramethylammonium formate and an equimolar mixture of sodium formate and an ammonium salt.

6. A hydrogenation catalyst obtainable by one of the processes of claims 1 to 5.

7. The use of the hydrogenation catalysts of claim 4 or prepared according to claims 1 to 5 for preparing hydroxylammonium salts.

8. A process for preparing hydroxylammonium salts by reducing nitrogen monoxide with hydrogen in the presence of a hydrogenation catalyst, characterized in that the hydrogenation catalyst used is the hydrogenation catalyst of claim 6 or a hydrogenation catalyst prepared according to claims 1 to 5.

9. A process for regenerating a platinum-based hydrogenation catalyst in a conventional manner, characterized in that the platinum in the oxidation state zero is reduced using a reducing agent comprising an ammonium or phosphonium salt of the general formula I
[XR₄]ₙY
where X is N or P, R is hydrogen, C₁-C₁₈-alkyl, C₅-C₁₀-cycloalkyl, phenyl or a phenyl-substituted C₁-C₄-alkyl radical, the phenyl radicals can be singly to triply substituted by C₁-C₆-alkyl, halogen, nitro or amino, with the proviso that the R's, which can be identical or different, are not all hydrogen when X = P, n is an integer from 1 to 3, and Y is an organic anion capable of reducing platinum in an oxidation state other than zero to platinum in the oxidation state zero.

10. A process as claimed in claim 9, characterized in that the reduction is carried out in the presence of a salt QZ, where Q is an alkali or alkaline earth metal cation and Z is an anion selected from the group consisting of halogen, sulfate, hydrogensulfate, phosphate and nitrate.

11. A process as claimed in claim 10, characterized in that the anions and cations of the reducing agent I and of the salt QZ are used in exchanged form, [XR₄]Z and QₙY.

## Revendications

1. Procédé de préparation d'un catalyseur d'hydrogénation par réduction de platine à un degré d'oxydation non inférieur à 2 dans un milieu aqueux, en présence d'un support contenant du carbone, éventuellement après qu'un empoisonnement partiel a eu lieu avec des composés contenant du soufre, de l'arsenic, du tellure ou de l'antimoine, à l'aide d'une réducteur, caractérisé en ce qu'on met en oeuvre, comme réducteur, un sel d'ammonium ou de phosphonium de la formule générale I :
[XR₄]ₙY (I)
dans laquelle X représente N ou P, R représente de l'hydrogène, de l'alkyle en C₁-C₁₈, du cycloalkyle en C₅-C₁₀, un radical de phényle, ainsi qu'un radical alkyle en C₁-C₄ substitué par du phényle, les radicaux de phényle pouvant être substitués à une jusqu'à trois reprises par des groupes alkyle en C₁-C₆, halogéne, nitro ou amino, à la condition que les R soient identiques ou différents, mais ne puissent pas représenter simultanément de l'hydrogène, dans le cas où X=P, n est un nombre entier de 1 à 3 et Y représente un anion organique, qui peut réduire du platine à un degré d'oxydation différent de zéro en un platine ayant un degré d'oxydation de zéro.

2. Procédé suivant la revendication 1, caractérisé en ce qu'on effectue la réduction en présence d'un sel QZ, où Q représente un cation de métal alcalin ou de métal alcalino-terreux et Z représente un anion, choisi parmi le groupe comprenant de l'halogène, du sulfate, du bisulfate, du phosphate et du nitrate.

3. Procédé suivant la revendication 2, caractérisé en ce qu'on met en oeuvre les anions et cations du réducteur I et du sel QZ sous une forme échangée, [XR₄]Z et QₙY.

4. Procédé suivant l'une des revendications 1 à 3, caractérisé en ce qu'on met en oeuvre, comme anion organique Y, un anion d'acide choisi parmi le groupe comprenant de l'acide formique, de l'acide acétique, de l'acide citrique et de l'acide ascorbique.

5. Procédé suivant l'une des revendications 1 à 4, caractérisé en ce qu'on met en oeuvre, comme réducteur, un composé choisi parmi le groupe comprenant du formiate d'ammonium, du formiate de tétraéthylammonium, du formiate de tétra-n-butylammonium, du formiate de tétraméthylammonium ainsi qu'un mélange équimolaire de formiate de sodium et d'un sel d'ammonium.

6. Catalyseur d'hydrogénation, obtenu par un des procédés suivant l'une des revendications 1 à 5.

7. Utilisation des catalyseurs d'hydrogénation suivant la revendication 6 ou préparés suivant l'une des revendications 1 à 5, pour la préparation de sels d'hydroxyalmmonium.

8. Procédé de préparation de sels d'hydroxylammonium par réduction de monoxyde d'azote avec de l'hydrogène, en présence d'un catalyseur d'hydrogénation, caractérisé en ce que, comme catalyseur d'hydrogénation, on met en oeuvre le catalyseur d'hydrogénation suivant la revendication 6 ou un catalyseur préparé selon l'une des revendications 1 à 5.

9. Procédé de régénération d'un catalyseur d'hydrogénation à base de platine d'une manière connue en soi, caractérisé en ce que, lors de la réduction en platine au degré d'oxydation zéro, on met en oeuvre, comme réducteur, un sel d'ammonium ou de phosphonium de la formule générale I :
[XR₄]ₙY (I)
dans laquelle X représente N ou P, R représente de l'hydrogène, de l'alkyle en C₁-C₁₈, du cycloalkyle en C₅-C₁₀, un radical de phényle, ainsi qu'un radical alkyle en C₁-C₄ substitué par du phényle, les radicaux de phényle pouvant être substitués à une jusqu'à trois reprises par des groupes alkyle en C₁-C₆, halogène, nitro ou amino, à la condition que les R soient identiques ou différents, mais ne puissent pas représenter simultanément de l'hydrogène, dans le cas où X=P, n est un nombre entier de 1 à 3 et Y représente un anion organique, qui peut réduire du platine à un degré d'oxydation différent de zéro en platine ayant un degré d'oxydation de zéro.

10. Procédé suivant la revendication 9, caractérisé en ce qu'on effectue la réduction en présence d'un sel QZ, où Q représente un cation de métal alcalin ou de métal alcalino-terreux et Z représente un anion choisi parmi le groupe comprenant de l'halogène, du sulfate, du bisulfate, du phosphate et du nitrate.

11. Procédé suivant la revendication 10, caractérisé en ce qu'on met en oeuvre les anions et cations du réducteur I et du sel QZ dans une forme échangée, [XR₄]Z et QₙY.
